Europäisches Patentamt

European Patent Office

Office européen des brevets

(19)

(11) Publication number: **0 191 406**
**B1**

(12) **EUROPEAN PATENT SPECIFICATION**

(45) Date of publication of patent specification: **27.09.89**

(51) Int. Cl.⁴: **G 11 B 5/85, G 11 B 5/84**

(21) Application number: **86101448.8**

(22) Date of filing: **04.02.86**

(54) Manufacturing process of magnetic recording medium.

(30) Priority: **05.02.85 JP 19282/85**

(43) Date of publication of application:
**20.08.86 Bulletin 86/34**

(45) Publication of the grant of the patent:
**27.09.89 Bulletin 89/39**

(84) Designated Contracting States:
**DE FR GB NL**

(56) References cited:
**DE-A-2 511 047**

(73) Proprietor: **Research Development Corporation of Japan
5-2, Nagatacho 2-chome
Chiyoda-ku Tokyo (JP)**

(73) Proprietor: **SONY CORPORATION
7-35 Kitashinagawa 6-Chome Shinagawa-ku
Tokyo 141 (JP)**

(72) Inventor: **Iwasaki, Kazuharu
405, Katsuragawa-kopo No. 6-28, 3-chome
Kamisugi Sendai-shi Miyagi-ken (JP)**

(74) Representative: **Melzer, Wolfgang, Dipl.-Ing. et al
Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Steinsdorfstrasse 10
D-8000 München 22 (DE)**

Courier Press, Leamington Spa, England.

EP 0 191 406 B1

**Description**

This invention relates to a manufacturing process of a magnetic recording medium, and more particularly to such a manufacturing process of a magnetic recording medium wherein a magnetic thin film thereof is formed by a dual simultaneous vapor deposition process.

As for a conventional magnetic recording medium, there is widely employed a particulate coating medium. This type is manufactured by a process wherein acicular-shaped magnetic powders and an organic binder are mixed together in an organic solvent to produce a magnetic paint including said magnetic powders well dispersed therein, and wherein this paint is applied to a non-magnetic substrate to form a coated film carried out by a magnetic orientation, and thereafter the coated film is dried.

As for the latter, there may be cited a ferromagnetic metal thin film medium which is being put to practical use in compliance with a demand of high density recording. This type is manufactured by a process wherein a ferro-magnetic metal thin film is formed on a non-magnetic substrate by a wet plating technique or a physical vapor deposition technique such as vapor deposition, ion plating, sputtering, etc. Typical examples of this recording medium are a magnetic recording medium for longitudinal mode magnetic recording comprising magnetic layer composed essentially of ferromagnetic metal such as Co, Fe, Ni, etc., and a magnetic recording medium for perpendicular mode magnetic recording comprising magnetic layer composed essentially of a Co-Cr alloy.

Further, for the purpose of improvement of this ferromagnetic metal thin film recording medium, there has been reported a process wherein an organic polymer is deposited on the magnetic thin film thereof for forming a protective layer or a lubricating layer.

Furthermore, there has been reported a process wherein a ferromagnetic substance and an organic polymer or an organic lubricant are simultaneously deposited on a support means by a simultaneous vapor deposition process to form a magnetic recording layer (US—A—4260466, US—A—4476195).

In respect of the particulate coating magnetic recording medium which has been employed widely, an improved performance thereof has been made in recent years by development of acicular-shaped magnetic powders, in compliance with a demand for higher recording density. However, the same is defective in that it is difficult to reduce the thickness of the magnetic layer, because the decrease in the thickness thereof is limited in terms of saturation magnetic flux density and reproduced output, and thereby there is caused a limitation in improvement in the recording density thereof. Thus, it is clear that this type of recording medium is not suitable for a high density magnetic recording medium.

Additionally, the same involves such disadvantages that the manufacturing process thereof is complicated, and manufacturing facilities and incident facilities such as a public hazard preventive apparatus for treatment of an organic solvent, magnetic powders and organic chemicals or the like which are essential for manufacturing thereof and for recovery of the organic solvent become extremely bulky on a large scale and require high costs.

In respect of the ferromagnetic metal thin film medium typically represented by a magnetic tape prepared by a vapor deposition process, owing to the fact that no non-magnetic material is contained in the magnetic layer thereof, the saturation magnetic flux density can be increased, and also owing to the fact that it is possible to decrease the thickness of the magnetic layer thereof, which is necessary for high density recording, increase of the recording density thereof can be achieved.

However, this type of medium is defective in that the adhesion strength of the ferromagnetic thin film to the non-magnetic substrate is so weak that, in running thereof at high speed, the magnetic film layer thereof is liable to suffer a mechanical deterioration such as damage, peeling or the like caused by a running system such as a magnetic head, a drum or the like. Additionally, the same is liable to suffer erosion, corrosion or the like, because the magnetic layer thereof is inferior in environmental stability. Thus, this type of medium is difficult to be put to practical use as a recording medium because the same is defective in mechanical durability and chemical corrosion resistance as mentioned above.

In respect of the foregoing process, for improving the foregoing defects, an organic polymer is deposited on the magnetic thin film to form a protective layer thereon. However, the resultant magnetic medium is defective in that there is a spacing loss caused in the course of recording and reproduction by said protecting layer having a comparatively large thickness, and in that there is a degradation resulting in the cause of recording and reproduction.

In respect of the foregoing manufacturing process of a magnetic recording medium for longitudinal mode recording by the simultaneous vapor deposition process as disclosed in the foregoing US Patents, the resultant composite film of the ferromagnetic substance and the polymer is defective in that it is small in contribution to a shape magnetic anisotropy resulting from its film structure, and consequently the inplane magnetic anisotropy is weak, and also the squareness ratio and the coercive force in longitudinal direction are small.

This results in lowering the reproduced output and sensitivity, and thus the product is not suitable for practical use as a magnetic recording medium.

It is the object of this invention to provide a manufacturing process of a magnetic recording medium dissolving the foregoing conventional problems, i.e. providing a product of increased reproduced output and sensitivity.

Through investigation of the cause of the above defects with this process, the inventor has found that those defects result from the fact that the organic polymer is deposited on the substrate at a normal incidence or at an oblique incidence of low incident angle.

In the course of the inventor's researches to reach the present invention, it has been found that the incident angle of an incident beam of polymer to a substrate is important. Namely, in manufacturing this magnetic recording medium, it is essential that an incident beam of polymer is irradiated on the surface of the substrate by an oblique incidence of great incident angle. This gives a large magnetic anisotropy to a composite film, and makes it possible to obtain a thin film medium having a useful and practical magnetic property.

Thus, by the foregoing conventional manufacturing process, it has been impossible to provide a magnetic recording medium which has a fully satisfactory high magnetic property, in addition to an improved mechanical durability and an improved chemical corrosion resistance. As mentioned above, even by the conventional simultaneous vapor deposition process, the resultant composite film of the ferromagnetic substance and the polymer is only small in contribution to a shape magnetic anisotropy, and is small in coercive force and squareness ratio. Consequently, such a magnetic recording medium as above also is not sufficient in reproduced output and sensitivity, and thus is not of practical use.

According to this invention said object is solved by providing a manufacturing process of a magnetic recording medium comprising a dual vapor deposition process wherein the incident beams of an organic polymer and a ferromagnetic substance are simultaneously irradiated on a surface of a substrate, which process is characterized in that the incident beam of the organic polymer is irradiated on the surface of the substrate at any desired incident angle $\varphi_1$ in a range of $60°<\varphi_1 \leqq 90°$, and at the same time incident beam of the ferromagnetic substance is so irradiated on the surface of the substrate as not to be overlapped with the incident beam of the organic polymer so that a composite thin film of the ferromagnetic substance and the organic polymer may be formed on the surface of the substrate.

This invention will be explained in more detail with reference to the accompanying drawings, in which

Fig. 1 is a perspective view schematically explaining a manufacturing process of this invention,

Fig. 2 is a sectional view of a manufacturing apparatus for carrying out this invention, and

Fig. 3 is a diagram showing relative characteristic curves showing the magnetic property of the composite thin film against the change of incident angles of incident beam of an organic polymer.

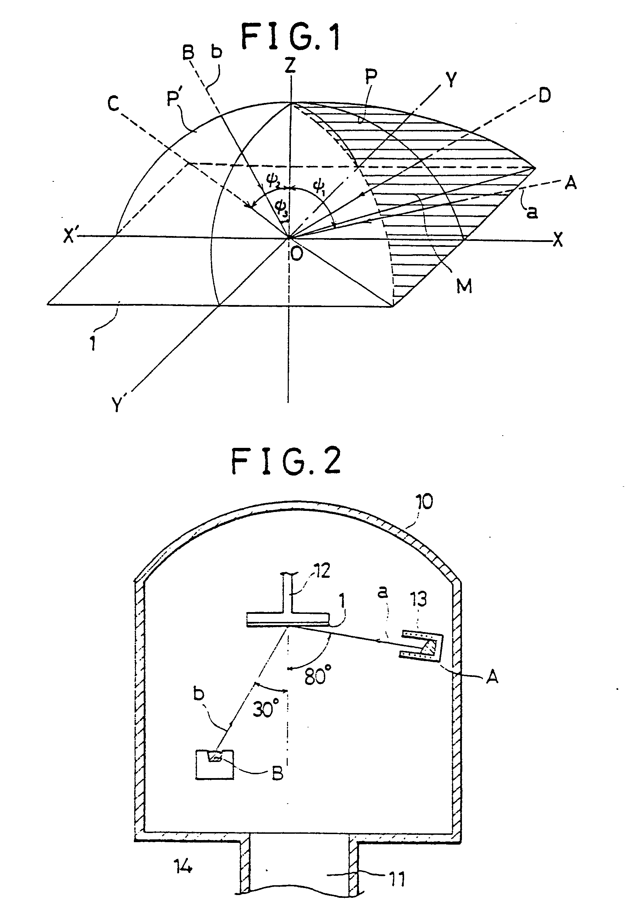

Fig. 1 is a schematic diagram for explaining a manufacturing process of this invention. Referring to Fig. 1 and Fig. 2, numeral 1 denotes a substrate, and according to this invention, an organic polymer and a ferromagnetic substance are deposited, by a dual simultaneous vapor deposition process, on this substrate 1 to form a magnetic layer. Now, for explaining this invention, co-ordinate axes are so defined as shown in Fig. 1. Namely, an X axis and a Y axis which are crossed at right angles with each other are defined along the surface of the substrate 1, and a Z axis passing through a crossing point O of those axes X, Y is so defined as to be normal to the surface of the substrate 1. X' and Y' are axes extending on negative sides of the X axis and the Y axis, respectively from the crossing point O.

According to this invention, a beam, or jet, of an organic polymer is irradiated on the substrate 1 at a high incident angle from a direction A as illustrated, and simultaneously therewith a beam of a ferromagnetic substance is irradiated on the substrate 1 from a direction different from the foregoing A direction.

Here, the incident angle $\varphi_1$ of the organic polymer is an angle between the 02 axis and the A direction of the incident beam of the organic polymer, and this invention is characterized in that this incident angle $\varphi_1$ is set to be in the range of $60°<_1 \leqq 90°$.

The incident beam, or jet, of the ferromagnetic substance irradiated on the substrate 1 simultaneously with the incident beam of the organic polymer is irradiated from any desired direction that is not overlapped with the incident beam of the organic polymer irradiated at the foregoing high incident angle $\varphi_1$.

By setting an incident direction of the ferromagnetic substance in relation to an incident direction of the organic polymer so as to have a predetermined relationship therebetween, the direction of the magnetic easy axis of the composite magnetic layer formed by the dual simultaneous vapor deposition process can be controlled at will.

Though explained in detail also by the description about experimental examples described hereafter, in a case in which simultaneously with the incidence of the organic polymer irradiated from the A direction defined as existing in a plane P formed by the axes OX and OZ, the ferromagnetic substance is irradiated on the substrate 1 from a B direction existing in a plane P' formed by the axes OX' and OZ, namely, in a case in which the ferromagnetic substance is so irradiated as to be opposite to the incident direction A of the organic polymer and to be in such a plane P, P' normal to the substrate 1 that contains the incident direction A of the organic polymer, the magnetic layer formed thereby has a magnetic easy axis in a direction perpendicular to the surface of the substrate 1. Also in such a case, in which in relation to the same incident direction A of the organic polymer as above, the ferromagnetic substance is irradiated from a direction existing in a plane formed by the axes OY' and OZ, that is, from a C direction, for instance, as illustrated, the composite magnetic layer has a magnetic easy axis in a direction perpendicular to the surface of the substrate 1. On the other hand, in a case, in which the ferromagnetic substance is irradiated from a D direction in the P plane as if it were to follow the incident direction A of the organic polymer, the composite magnetic layer has a magnetic easy axis in a direction parallel to the surface of the substance 1.

From these facts, according to this invention, it is noted that there is formed selectively either a magnetic layer having a perpendicular magnetic anisotropy or one having an in-plane magnetic anisotropy. A general condition for forming selectively those magnetic layers is as follows. Namely, in consideration of the plane P defined by the axis OX and OZ and including the incident direction $A$ of the organic polymer, a region obtained by turning this plane P about the OZ axis by $\pm 45°$ from the OX direction is assumed to be M. In general, in a case where the incident beam of the ferromagnetic substance is brought to be irradiated from any direction outside the region M, there can be obtained a magnetic layer having a perpendicular magnetic anisotropy, and in this case the incident angle $\varphi_2$ of the ferromagnetic substance in relation to the substrate is in the range of $0° \leqq \varphi_2 \leqq 90°$, the incident angle $\varphi_2$ of the ferromagnetic substance being defined between the OZ axis and the B-direction (or C-direction). On the other hand, the incident beam of the ferromagnetic substance for obtaining the magnetic layer having the in-plane magnetic anisotropy (D-direction) lies within the foregoing region M.

For obtaining the composite thin film having the desired magnetic anisotropy, the incident angle $\varphi_1$ of the organic polymer is in the range of $60° < \varphi_1 \leqq 90°$. In any case, however, if the incident angle thereof exceeds 80°, the efficiency of the vapo deposition is lowered. Accordingly although the composite thin film having the magnetic anisotropy can be obtained even at an incident angle of beyond 80°, it is preferable from the viewpoint of productivity that the range of the incident angle thereof is limited to $60° < \varphi_1 \leqq 80°$.

The organic polymer may be irradiated from plural directions. However, it is essential that each of the incident beams of the plural organic polymers should be within foregoing defined high incident angle range. In this case, the relation of the incident direction thereof with the incident direction of the ferromagnetic substance may be determined by its relation with a vectorial composite direction considering the intensity and the direction of the incident beams of the plural organic polymer.

By the foregoing manufacturing process according to this invention, the fine particles of the ferromagnetic substance in the composite film are mixed with the organic polymer, so that the composite film becomes both high in chemical corrosion resistance and strong in adhesion strength thereof to the substrate, and thus there is obtained a magnetic recording medium which is also excellent in mechanical durability.

Here, the term "organic polymer" is used to include not only synthetic resin polymers, but also monomers or oligomers to be produced by polymerization thereof into organic polymers. Namely, the same may be, for instance, ultraviolet ray, electron ray or polymerization catalyst hardened resin such as monomers or oligomers such as hydroxyethyl acrylate, hexanediol diacrylate, neopentylglycol diacrylate, methyl-α-chloroacrylate, trimethylol propane triacrylate, dipentaol hexaacrylate, trimethyrol propane tridiethyleneglycol acrylate, urethane acrylate, adipic acid — hexamethylenediamine oligomer, etc. or synthetic resins such as polytetrafluoroethylene, polyethylene terephthalate, polycarbonate, polyparaxylene, polypropylene, polyethylene, polystyrene, trifluorochloroethylene, allyl trifluoroacethylene, silicone oil or the like.

As for the ferromagnetic substance, the same may be, for instance, a ferromagnetic single element such as Co, Fe, Ni or the like, a magnetic alloy such as CO-Fe, Co-Ni, Fe-Ni, Co-Fe-Ni, Co-Cu, Co-Au, Co-Cr, Co-Mn, Co-V, Co-Pt, Fe-Cu, Fe-Au, Fe-Mn, Fe-Cr, Fe-Si, Ni-Cu, Co- rare earth metal, Fe- rare earth metal, Mn-Bi, Mn-Sb, Mn-Al or the like, a ferrite compound such as $Fe_3O_4$, Ba ferrite, Sr ferrite, or a ferromagnetic compound such as $Fe_4N$, $Fe_8N$ or the like.

The substrate is made of a non-magnetic material, and the material thereof may be, for instance, a plastics material such as polyethylene terephthalate, polyimide, polyvinyl chloride, cellulose triacetate, polycarbonate, polyethylene naphthalate, an inorganic material such as glass, ceramics or the like, or a metallic material such as Al, Al-Mg, Cu, silicon wafer or the like. The shape of the substrate may be properly selected from film, sheet, tape, disc, drum or the like in accordance with the purpose of use thereof.

A typical embodiment of the present invention is a process for manufacturing the foregoing binary system composite film comprising the organic polymer and the ferromagnetic substance, but the same may be a ternary system into which an additional material such as lubricant, antistatic agent or the like is mixed as a third component, by a simultaneous deposition process.

Next, such an embodying example of this invention that the foregoing binary (or dual) system composite thin film is manufactured by a dual simultaneous vapor deposition process will be explained with reference to Fig. 2 as follows:—

Referring to this Figure 2, numeral 10 denotes a bell jar, that is, a vacuum treatment container for a treatment apparatus, and the bell jar 10 is connected, through an opening 11 made through one side wall thereof, to a vacuum pump for a high vacuum evacuation (not illustrated). A holding member 12 holding the substrate 1 so that the same may be in a horizontal posture to face downwards is disposed at an upper portion of the interior thereof. The foregoing construction is not different from that of a conventional apparatus. According to this invention, however, a heating evaporation crucible container 13 of resistance heating type which contains the organic polymer $A$ is disposed at a position which is on one side of the substrate 1 and obliquely below the same so that its center axis is so inclined that an incident angle $\varphi_1$ of an incident beam $a$ thereof may become 80° for instance, to the direction normal to the surface of the substrate 1, while another heating evaporation container 14 of electron beam gun (not illustrated) heating type which contains the ferromagnetic material B is so disposed at a position which is on the other side of the substrate 1 and obliquely below the same so that an incident angle $\varphi_2$ of an incident beam b thereof may be 30° for instance, to the direction normal to the surface of the substrate 1, and the two incident beams a, b may be simultaneously brought to be concentrated on one point of the surface of the substrate 1 for obtaining thereon a composite magnetic thin film comprising a mixture thereof having a perpendicular magnetic anisotropy. The heating systems described for evaporating those substances A, B by heating are not limited to the foregoing types.

Additionally, it is optional that there are provided any facilities for cooling and heating the substrate 1, and thereby the substrate may be cooled or heated as desired. Thus, it is preferable that the temperature of the substrate 1 is adjusted to any desired one depending on the kind of the organic polymer to be deposited thereon.

The dual simultaneous vapo deposition process of this invention is not limited to the foregoing vapor deposition process, but the composite film, which is the object of this invention, may be formed by any desired process other than the foregoing vapor deposition process as long as the same is such that the ferromagnetic substance and the organic polymer are deposited, under vacuum condition, on the substrate in the form of vapor or ionized vapor. As for such a process other than the vapor deposition process, there may be cited, for instance, a sputtering process (an ion beam sputtering process), an ion plating process, a cluster ion beam process, etc.

The above explanation has been made about the embodying example in which the two kinds of substances are deposited on the substrate 1 under the condition that the substrate 1 is stationarily held, but such a modification can be considered in which those are deposited on a substrate 1 in the form of a drum or disc which is held in a rotary condition, or on a substrate 1 in the form of a tape which is held on a horizontal or inclined posture and is movable continuously in its lengthwise direction.

Next, a process for manufacturing a magnetic recording medium of this invention, using the foregoing apparatus, will be explained more specifically as follows:—

Embodying Example 1

An aluminium disc was used for the substrate 1 in the bell jar 10 of the foregoing apparatus, and the temperature thereof was so controlled by cooling as to keep constant at −80°C by a coolant passed through the holding member 12. Polyethylene therephthalate was used for the organic polymer $A$, and Co was used for the ferromagnetic substance B. The incident angle $\varphi_1$ of the incident beam $a$ of the organic polymer $A$ was set at 80°, and the incident angle $\varphi_2$ of the incident beam b of the ferromagnetic material B was set at 32°. The pressure during the vapor deposition was kept at $4,0 \times 10^{-6}$ Torr ($5,32 \times 10^{-4}$ Pa), and the incident beams of the two substances $A$, B were simultaneously irradiated on the surface of the substrate 1, in the common incident plane, from mutually opposite directions, and thus by deposition of vapors thereof there was formed on the substrate 1 a binary system composite thin film of 10000 Å ($10^{-6}$ m) in thickness. The magnetic property in the direction normal to the surface of the composite thin film of the magnetic disc produced is shown in the following Table 1.

Table 1

| Saturation magnetic flux density $4\pi Ms$ | Coercive force $Hc \perp$ | Squareness ratio $(Mr*/Ms) \perp$ |
|---|---|---|
| 3200 gauss | 1000 Oe | 0.93 |

(1 gauss = $10^4$ tesla)

Here, "Mr*" means a residual magnetization resulting from demagnetizing field compensation.

As it is clear from the above Table, the composite film exhibits a good perpendicular anisotropy medium. It has been found from observation of the cross-sectional structure of this composite film through a transmission electron microscope that a composite column of the polyethylene terephthalate and the Co grows vertically in relation to the substrate 1.

Embodying Example 2

By almost the same manner as that in Embodying Example 1, a composite film of polyethylene terephthalate and Co having a perpendicular magnetic anisotropy was formed. In this case, however, a polyimide film was used for the substrate 1, and the substrate was at room temperature. The pressure during the vapor deposition was $5 \times 10^{-6}$ Torr ($6,65 \times 10^{-4}$ Pa). The thickness of the composite film formed by deposition of those vapors was 7000 Å ($0,7 \times 10^{-6}$ m). The magnetic property in the direction normal to the film surface of the resultant composite film produced is as shown in the following Table 2.

Table 2

| saturation magnetic flux density $4\pi$ Ms | Coercive force Hc $\perp$ | Squareness ratio (Mr*/Ms) $\perp$ |
|---|---|---|
| 5000 gauss | 750 Oe | 0.87 |

Embodying Example 3

The material of the substrate 1, the temperature thereof, the material A of the organic polymer, the material B of ferromagnetic substance, the position of the organic polymer and the incident angle $\varphi_1$ of the incident beam a thereof were substantially equal to those in Embodying Example 1, but the ferromagnetic substance is so positioned that the incident beam thereof may lie in an incident plane crossing at right angles with the incident plane in which the incident beam a of the polyethylene terephthalate lies, and the incident angle thereof was set at 33°. The pressure during the vapor deposition was kept at $3.0 \times 10^{-6}$ Torr ($3,99 \times 10^{-4}$ Pa). Thus, a composite thin film deposited on the substrate was formed, and the film thickness thereof was 8500 Å ($0,85 \times 10^{-6}$ m). The magnetic property in the direction normal to the film surface of this compound film is shown in the following Table 3.

Table 3

| Saturation magnetic flux density $4\pi$ Ms | Coercive force Hc $\perp$ | Squareness ratio (Mr*/Ms) $\perp$ |
|---|---|---|
| 4700 gauss | 800 Oe | 0,87 |

As it is clear from the above Table, the composite magnetic film exhibits a perpendicular anisotropy.

Embodying Example 4

The material of the substrate 1, the temperature thereof, the materials A, B of the organic polymer and the ferromagnetic substance, the position of the organic polymer and the incident angle $\varphi_1$ of the incident beam a thereof were substantially equal to those in Embodying Example 1. However, the ferromagnetic substance was positioned on the same side with the organic polymer, and the incident beam thereof is in the incident plane including the incident beam of the organic polymer, and the incident angle was set at 68°. The pressure during the vapor deposition was kept at $5.5 \times 10^{-6}$ Torr ($7,315 \times 10^{-4}$ Pa). The film thickness of the composite film formed by the simultaneous vapor deposition of the two materials was 4500 Å ($0,45 \times 10^{-6}$ m). The magnetic property in the longitudinal direction of the film surface of the polyethylene terephthalate — Co composite film thus obtained is shown in the following Table 4.

Table 4

| Saturation magnetic flux density $4\pi$ Ms | Coercive force Hc $\perp$ | Squareness ratio (Mr*/Ms) $\perp$ |
|---|---|---|
| 9800 gauss | 800 Oe | 0.75 |

As it is clear from the above Table 4, this composite magnetic film exhibits an in-plane magnetic anisotropy.

6

### Embodying Example 5

In almost the same manner as that in Embodying Example 1, except that polytetrafluoroethylene was used for the organic polymer and the pressure was set at $4.5 \times 10^{-6}$ Torr $(5.85 \times 10^{-4}$ Pa), a composite film of polytetrafluoroethylene — Co was formed. The composite film thickness was 8700 Å $(0,87 \times 10^{-6}$ m).

The magnetic property in the direction normal to the film surface of the composite film is as shown in the following Table 5.

### Table 5

| Saturation magnetic flux density<br><br>$4 \pi$ Ms | Coercive force<br><br>Hc $\perp$ | Squareness ratio<br><br>(Mr*/Ms) $\perp$ |
|---|---|---|
| 5000 gauss | 850 Oe | 0.90 |

As it is clear from the above table, the composite magnetic film exhibits a good perpendicular anisotropy.

Next, the significance of limiting the incident angle $\varphi_1$ of the organic polymer of this invention to the range of $60° < \varphi_1 \leqq 90°$ will be made clear from the following comparative experimental example.

### Comparative Experimental Example

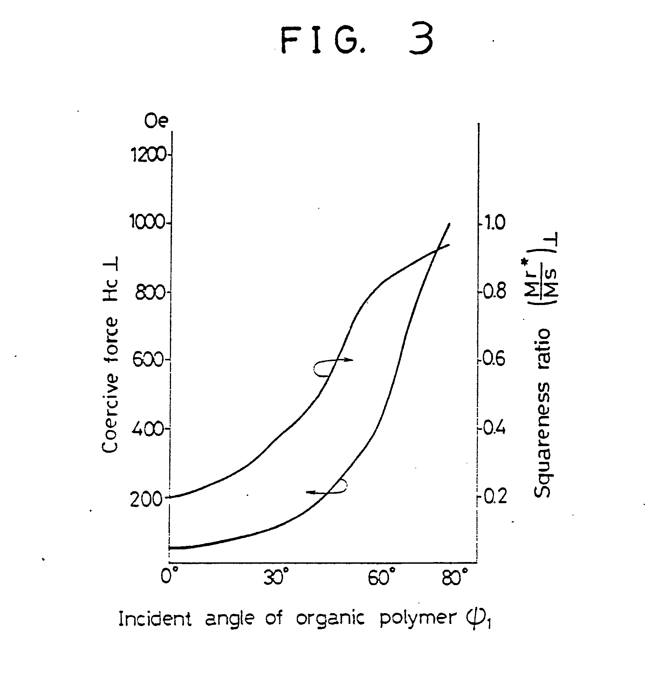

The material of the substrate, the temperature thereof and the materials of the organic polymer and the ferromagnetic substance were substantially equal to those in Embodying Example 1. Additionally, the arrangements of the incident planes and the incident directions of the two incident beams, the incident angle $\varphi_2$ of the incident beam of the ferromagnetic substance, and the pressure during the vapor deposition were also the same as those in Embodying Example 1. However, the incident angle $\varphi_1$ of the incident beam of the organic polymer, that is, polyethylene terephthalate, for instance, was changed variously within a range of $0° \leqq \varphi_1 \leqq 80°$, and thereby various composite films having various film thicknesses in the range of 8000—10000Å $(0.8—1.10^{-6}$ m) and various saturation magnetic flux densities in the range of 3000—4000 gauss $(30—40 \times 10^6$ T) were formed on respective substrates, and each of the products was measured in respect of coercive force Hc $\perp$ and squareness ratio in the direction normal to the film surface thereof. The measured results thereof are as shown in Fig. 3. As it will be clear therefrom, in cases where the incident angle $\varphi_1$ of the incident beam of the organic polymer is below 60°, the coercive force decreases rapidly, and the squareness ratio lowers remarkably, and thus the perpendicular magnetic anisotropy of the composite films lowers extremely. Accordingly, in other words, it has been confirmed that it is not effective in increase in the magnetic anisotropy to set the incident angle $\varphi_1$ of the organic polymer at such a low incident angle range of $0° \leqq \varphi_1 \leqq 60°$. If, the contrary, the incident angle $\varphi$, thereof is set at a high incident angle exceeding 60° according to the characteristic feature of this invention, the coercive force thereof can sharply increase and the squareness ratio can be extremely improved.

The magnetic recording medium comprising the composite film of the organic polymer and the ferromagnetic substance manufactured by any of the foregoing embodying examples of this invention may be thereafter treated, when a mechanical strength thereof is required, with such a procedure that the organic polymer deposited is further polymerized by applying to the film a polymerization initiator, that is, polymerization catalyst or by irradiating to the film an ultraviolet ray or electron ray, so that the organic polymer of the composite film is formed into a hardened and higher molecular one. In a case where the material of the organic polymer is of monomers or oligomers, it is necessary that the resultant composite magnetic film is subjected to the polymerization treatment by applying to the film a catalyst, u.v. ray or electron ray. As a catalyst, there may be used any known one such as diacyls such as acetyl peroxide, benzoxyl peroxide, etc.

Thus, according to this invention, when a magnetic recording medium comprising a composite film of an organic polymer and a ferromagnetic substance is formed on a surface of a substrate, especially an incident angle of an incident beam of the the organic polymer is set within a range of $60° < \varphi_1 \leqq 90°$, and the incident beam of the ferromagnetic substance is so set as to be in a desired incident plane and at a desired incident angle but not as to be overlapped with the incident beam of the organic polymer, and the two beams are simultaneously irradiated on the surface of the substrate, so that there can be obtained a high density magnetic recording medium comprising a composite film having a large magnetic anisotropy in the direction normal or parallel to the surface of the magnetic film and also having a high coercive force and an extremely improved squareness ratio. Additionally, the magnetic recording layer comprises a mixture of the organic polymer and the ferromagnetic substance, so that there can be obtained a magnetic recording medium which is excellent in both mechanical durability and chemical corrosion resistance.

**Claims**

1. A manufacturing process of a magnetic recording medium of the type comprising a dual vapor deposition process in which the incident beams of an organic polymer and a ferromagnetic substance are simultaneously irradiated on a surface of a substrate (1), characterized in that an incident beam (a) of the organic polymer (A) is brought to be irradiated on the surface of the substrate (1) at any desired incident angle $\varphi_1$ in a range of $60° < \varphi_1 \leqq 90°$, and at the same time an incident beam (b) of the ferromagnetic substance (B) is so brought to be irradiated on the surface of the substrate (1) as not to be overlapped with the incident beam (a) of the organic polymer (A) so that a composite film of the ferromagnetic substance (B) and the organic polymer (A) may be formed on the surface of the substrate (1).

2. A manufacturing process of a magnetic recording medium as claimed in claim 1, characterized in that the incident beam (a) of the organic polymer (A) and the incident beam (b) of the ferromagnetic substance (B) are simultaneously irradiated on the surface of the substrate (1) along a common incident plane and from mutually opposite directions, and the incident angle $\varphi_2$ of the incident beam (b) of the ferromagnetic substance (B) is so set as to be in the range of $0° \leqq \varphi_2 \leqq 90°$ so that an organic polymer-ferromagnetic substance composite thin film having a perpendicular magnetic anisotropy may be formed on the surface of the substrate (1).

3. A manufacturing process of a magnetic recording medium as claimed in claim 1, characterized in that the incident beam (a) of the organic polymer (A) and the incident beam (b) of the ferromagnetic substance (B) are simultaneously irradiated on the surface of the substrate (1) along respective incident planes crossing at right angles one with another, from respective directions crossing one another, and the incident angle $\varphi_2$ of the incident beam (b) of the ferromagnetic substance (B) is in a range of $0° \leqq \varphi_2 \leqq 90°$ so that an organic polymer-ferromagnetic substance composite thin film having a perpendicular magnetic anisotropy may be formed on the surface of the substrate (1).

4. A manufacturing process of a magnetic recording medium as claimed in claim 1, characterized in that the incident beam (a) of the organic polymer (A) and the incident beam (b) of the ferromagnetic substance (B) are simultaneously irradiated on the surface of the substrate (1) along a common incident plane or respective incident planes adjacent one to another, from respective directions on the same side, and the incident angle $\varphi_2$ of the incident beam (b) of the ferromagnetic substance (B) is in a range of $0° < \varphi_2 \leqq 90°$ so that an organic polymer-ferromagnetic substance composite thin film having an inplane magnetic anisotropy may be formed on the surface of the substrate (1).

5. A manufacturing process of a magnetic recording medium as claimed in any of claims 1 to 4, characterized in that the incident angle $\varphi_1$ of the incident beam (a) of the organic polymer (A) is in a range of $60° < \varphi_1 \leqq 80°$.

**Patentansprüche**

1. Verfahren zur Herstellung eines magnetischen Aufzeichnungsmediums, das einen zweifachen Aufdampfungsprozeß umfaßt, bei dem aus einem organischen Polymer und einer ferromagnetischen Substanz bestehene Einfallsstrahlen gleichzeitig auf eine Oberfläche eines Substrats (1) auftreffen, dadurch gekennzeichnet, daß der Einfallsstrahl (a) des organischen Polymers (A) so gesteuert wird, daß er unter einem gewünschten Auftreffwinkel $\varphi_1$, der im Bereich von $60° < \varphi_1 \leqq 90°$ liegt, auf die Oberfläche des Substrats (1) auftrifft,
und daß der Einfallsstrahl (b) der ferromagnetischen Substanz (B) so gesteuert wird, daß er gleichzeitig so auf die Oberfläche des Substrats (1) auftrifft, daß er den Einfallsstrahl (a) des organischen Polymers (A) nicht überlappt,
so daß sich auf der Oberfläche des Substrats (1) eine aus der ferromagnetischen Substanz (B) und dem organischen Polymer (A) bestehende Verbundschicht ausbilden kann.

2. Verfahren zur Herstellung eines magnetischen Aufzeichnungsmediums nach Anspruch 1, dadurch gekennzeichnet,
daß der Einfallsstrahl (a) des organischen Polymers (A) und der Einfallsstrahl (b) der ferromagnetischen Substanz (B) entlang einer gemeinsamen Einfallsebene und aus entgegengesetzten Richtunbgen gleichzeitig auf die Oberfläche des Substrats (1) gestrahlt werden,
und daß der Auftreffwinkel $\varphi_2$ des Einfallsstrahls (b) der ferromagnetischen Substanz (B) so eingestellt wird, daß er im Bereich $0° \leqq \varphi_2 \leqq 90°$ liegt,
so daß sich auf der Oberfläche des Substrats (1) eine dünne Verbundschicht aus organischem Polymer und ferromagnetischer Substanz mit senkrechter magnetischer Anisotropie ausbilden kann.

3. Verfahren zur Herstellung eines magnetischen Aufzeichnungsmediums nach Anspruch 1, dadurch gekennzeichnet,
daß der Einfallsstrahl (a) des organischen Polymers (A) und der Einfallsstrahl (b) der ferromagnetischen Substanz (B) aus einander kreuzenden Richtungen in Einfallsebenen auf die Oberfläche des Substrats (1) gerichtet werden, die sich unter einem rechten Winkel kreuzen,
und daß der Auftreffwinkel $\varphi_2$ des Einfallsstrahls (b) der ferromagnetischen Substanz (B) so eingestellt wird, daß er im Bereich $0° \leqq \varphi_2 \leqq 90°$ liegt,
so daß sich auf der Oberfläche des Substrats (1) eine dünne Verbundschicht aus organischem Polymer und ferromagnetischer Substanz mit senkrechter magnetischer Anisotropie ausbilden kann.

4. Verfahren zur Herstellung eines magnetischen Aufzeichnungsmediums nach Anspruch 1, dadurch gekennzeichnet,

daß der Einfallsstrahl (a) des organischen Polymers (A) und der Einfallsstrahl (b) der ferromagnetischen Substanz (B) entlang einer gemeinsamen Einfallsebene oder jeweils entlang einander benachbarter Einfallsebenen und aus auf der gleichen Seite liegenden Richtungen gleichzeitig auf die Oberfläche des Substrats (1) gerichtet werden,

und daß der Auftreffwinkel $\varphi_2$ des Einfallsstrahls (b) der ferromagnetischen Substanz (B) so eingestellt wird, daß er im Bereich $0° \leqq \varphi_2 \leqq 90°$ liegt,

so daß sich auf der Oberfläche des Substrats (1) eine dünne Verbindschicht aus organischem Polymer und ferromagnetischer Substanz mit in gleicher Ebene liegender magnetischer Anisotropie ausbilden kann.

5. Verfahren zur Herstellung eines magnetischen Aufzeichnungsmediums nach einem der Ansprüche 1 bis 4, dadurch gekennzeichnet,

daß der Auftreffwinkel $\varphi_1$ des der Einfallsstrahls (a) des organischen Polymers (A) im Bereich $60° < \varphi_1 \leqq 80°$ liegt.

**Revendications**

1. Procédé de fabrication d'un support d'enregistrement magnétique du type consistant en une opération de dépôt en phase vapeur double dans laquelle les faisceaux incidents d'un polymère organique et d'une substance ferromagnétique sont propagés simultanément sur une surface d'un substrat (1), caractérisé en ce que:

— un faisceau incident (a) du polymère organique (A) est amené à être propagé sur la surface du substrat (1) selon n'importe quel angle incident voulu $\varphi_1$ dans un intervalle $60° < \varphi_1 \leqq 90°$, et

en même temps, un faisceau incident (b) de la substance ferromagnétique (B) est aussi amené à être propagé sur la surface du substrat (1) de manière à ce qu'il ne soit pas recouvert par le faisceau incident (a) du polymère organique (A),

de sorte qu'un film composite de la substance ferromagnétique (B) et du polymère organique (A) peut être formé sur la surface du substrat (1).

2. Procédé de fabrication d'un support d'enregistrement magnétique selon la revendication 1, caractérisé en ce que:

— le faisceau incident (a) du polymère organique (A) et le faisceau incident (b) de la substance ferromagnétique (B) sont propagés simultanément sur la surface du substrat (11)-le long d'un plan incident commun et à partir de directions opposées entre elles, et

— l'angle incident $\varphi_2$ du faisceau incident (b) de la substance ferromagnétique (B) est établi de manière à ce qu'il soit dans l'intervalle $0° \leqq \varphi_2 \leqq 90°$ de sorte qu'un film mince composite de polymère organique-substance ferromagnétique ayant une anisotropie magnétique perpendiculaire peut être formé sur la surface du substrat (1).

3. Procédé de fabrication d'un support d'enregistrement magnétique selon la revendication 1, caractérisé en ce que:

— le faisceau incident (a) du polymère organique (A) et le faisceau incident (b) de la substance ferromagnétique (B) sont propagés simultanément sur la surface du substrat (1) le long de plans incidents respectifs se coupant à angles droits entre eux, à partir de directions respectives se coupant entre elles, et

— l'angle incident $\varphi_2$ du faisceau incident (b) de la substance ferromagnétique (B) est compris dans un intervalle $0° \leqq \varphi_2 \leqq 90°$

de sorte qu'un film mince composite de polymère organique-substance ferromagnétique ayant une anisotropie magnétique perpendiculaire peut être formé sur la surface du substrat (1).

4. Procédé de fabrication d'un support d'enregistrement magnétique selon la revendication 1, caractérisé en ce que:

— le faisceau incident (a) du polymère organique (A) et le faisceau incident (b) de la substance ferromagnétique (B) sont propagés simultanément sur la surface du substrat (1) le long d'un plan incident commun ou de plans incidents respectifs voisins entre eux, à partir de directions respectives du même côté, et

— l'angle incident $\varphi_2$ du faisceau incident (b) de la substance ferromagnétique (B) est dans un intervalle $0° < \varphi_2 \leqq 90°$

de sorte qu'un film mince composite de polymère organique-substance ferromagnétique ayant une anisotropie magnétique en plan peut être formé sur la surface du substrat (1).

5. Procédé de fabrication d'un support d'enregistrement magnétique selon l'une quelconque des revendications 1 à 4, caractérisé en ce que l'angle incident $\varphi_1$ du faisceau incident (a) du polymère organique (A) est compris dans un intervalle $60° < \varphi_1 \leqq 80°$.

# FIG.1

# FIG.2

# FIG. 3